# EUROPEAN PATENT SPECIFICATION

(11) **EP 0 871 997 B1**
(45) Date of publication and mention of the grant of the patent: **09.08.2000**
(21) Application number: 96902404.1
(22) Date of filing: 04.03.1996
(51) Int. Cl.: H01R 24/06, H01R 13/24, H01R 31/06

(54) **PORTABLE TELEPHONE CONNECTION SYSTEM**
VERBINDUNGSSYSTEM FÜR TRAGBARES TELEFON
SYSTEME DE CONNEXION POUR RADIOTELEPHONE PORTATIF

(30) Priority: 16.03.1995 GB 9505318; 24.07.1995 GB 9515153
(43) Date of publication of application: 21.10.1998
(73) Proprietor: THE WHITAKER CORPORATION, Wilmington, Delaware 19808 (US)
(72) Inventor: STERKEN, Cornelis, Adrianus, Henricus, Maria, DECEASED (NL); VAN TILBURG, Cor, NL-5223 HV 's-Hertogenbosch (NL); TUIN, Jacobus, Nicolaas, NL-5684 CW Best (NL)
(74) Representative: Heinz-Schäfer, Marion
(86) International application number: IB9600160
(87) International publication number: WO9628865

(56) References cited:
- EP-A- 0 157 976
- EP-A- 0 158 531
- EP-A- 0 591 723
- WO-A-89/10639
- WO-A-94/11925
- GB-A- 2 243 034

## Description

This invention relates to a connection system for portable telephones, in particular connector system enabling the connection of data, power and other accessories to a portable telephone.

The use of portable telephones as a media for transmission of voice, computer, fax and other data is increasingly in demand. Portable telephones place stringent demands on compactness of components mounted thereon, and in particular on the interconnection system, whilst nevertheless requiring a very reliable connection to external apparatus, in particular for computerized data transmission or reception. Furthermore, not only should the system be compact and reliable, but also cost-effective which is particularly important for such mass produced consumer articles. Furthermore, it would be desirable to have a portable telephone connection system that can connect to data, power and other applications when positioned on a holder or cradle or when remote from the holder. In other words the connector system should allow rapid and reliable pluggability if possible by simply positioning the portable telephone on the holder or for connecting cable connectors when the portable telephone is remote from the holder. Due to the mobility of the telephone and the number of connection cycles, it is also important to ensure that the connection system is robust and well protected from external damage.

The document WO-A-94/11925 discloses a portable telephone connection system comprising a cradle connector having resiliently biasable contacts mounted in a housing, the contacts having a very supple meandering spring section to enable large travel for compensating tolerances in the position of the connectors.

It is therefore an object of this invention to provide a compact, robust and versatile portable telephone connection system.

It is a further object of this invention to provide a cost-effective portable telephone connection system for connection to a plurality of different devices such as power and data application devices in a compact configuration.

The objects of this invention have been achieved by providing a portable telephone connection system as defined in claim 1.

There is disclosed herein a portable telephone connection system comprising an in-phone connector for assembly to a portable telephone, the in-phone connector having an insulative housing and a plurality of juxtaposed, substantially identical strip contacts positioned therein, the contacts having a top contact surface for receiving edge contacts thereagainst, and a connection section for contacting a printed circuit board (PCB), wherein the connector incorporates power, data and signal contacts, the connection system further comprising complementary connectors for mating with the in-phone connector, one of the complementary connectors being a cradle connector having resiliently biasable contacts mounted in a housing, the contacts having a very supple meandering spring section to enable large travel for compensating tolerances in the position of the connectors and also to protect the contacts from damage. Advantageously, the cradle contacts could be stamped from sheet metal in a substantially planar profile, whereby a contact section for mating with the complementary strip contacts of the in-phone connector are embossed along their length to increase their stiffness with respect to lateral bending forces. The cradle connector could advantageously be provided with latches for retention thereof to the in-phone connector, where the latches extend beyond tips of the cradle contacts to ensure protection thereof. The cradle contacts are advantageously biasable fully within the cradle connector housing without damage to the spring portion due to its suppleness, to ensure that even if a foreign object abuts the contacts, they cannot be damaged by overstressing. Further advantageously, the latching means enable plugging of other complementary connectors such as a charger plug or signal connector separately to the in-phone connector due to positioning of a plurality of latching positions in the in-phone connector for latching of different plugs at different positions thereto. This is useful for connecting separate signal or battery charging plugs to a portable telephone when it is remote from the cradle or holder station. In one embodiment, the in-phone connector housing may comprise a plurality of distinct chambers for receiving different connectors for different applications therein, the chambers being traversed by a central support element having a plurality of juxtaposed, substantially identical strip contacts positioned thereacross, the contacts having a top contact surface and side contact surfaces extending substantially orthogonally from ends of the top surface. Spring loaded contacts of a data connector can thus abut against the top surface of the corresponding contacts for connection thereto, whilst fork-typed contacts of a power connector can engage the side surfaces of corresponding contacts in order to allow simultaneous connection of data, power or other applications to the in-phone contacts.

Due to the construction of the in-phone contacts with a plurality of substantially identical terminals having a top wall and side walls for contact, a cost-effective connection system is provided whilst nevertheless allowing connectors having substantially different contact requirements to be connected thereto. For example, the high current power contacts can apply high contact pressure on the contact side surfaces whilst the data contacts which don't require high electrical current flows, are simply biased on the top surfaces of the in-phone contacts thereby allowing rapid, reliable connection with relatively low mating forces. Furthermore, the in-phone connector can be connected to a cradle connector by simply positioning the telephone thereon.

In order to ensure correct polarization of a data connector to the in-phone connector, the in-phone data connector receiving chamber can be provided with opposing side walls of different lengths to match with the lengths of the data connector side walls thus ensuring correct orientation. The data connector side walls can be provided on either side of a row of juxtaposed data contacts, extending up to or beyond tips of the data contacts to provide protection thereof. The data connector side walls can be provided with latching hook members at their ends proximate the data contact tips, the side walls being resiliently inwardly biasable such that they act as latching members which engage shoulders on the in-phone connector side walls. The data connector can thus be quickly plugged and unplugged from the in-phone connector by merely gripping it on either side (i.e. pressing against the side walls) to release the latching mechanism.

The in-phone connector contacts can be formed from thin strips of metal of substantially constant widths and mounted in a close spacing, one next to the other, for a very compact arrangement.

In another embodiment, the in-phone connector only has a top surface, and the cradle connector has a plurality of similar, substantially planar supple spring contacts, both for power and data. The latter connection system would be very cost-effective and also enable very simple and reliable coupling of the connectors. In the latter embodiment, the latching means are also a guiding means and have a polarizing feature to ensure that correct orientation of the connectors, in particular for external complementary connectors such as signal or power connectors.

The connection section of the in-phone connectors have, in an advantageous embodiment, resilient contact beams that are reversely bent into a PCB receiving slot of the connector for resilient biasing against circuit traces along an edge of a telephone PCB. The connector can thus be plugged to the edge of a PCB in the telephone for ensuring that a minimum surface area of the PCB is taken up. The latter is important as due to the miniaturization and increase in the number of components of a portable telephone, components must take as little surface area as possible.

Examples of telephone connection systems will now be described with reference to the figures, whereby;
Figure 1 is an isometric view of an in-phone connector;
Figure 2 is a top view of the connector of Figure 1;
Figure 3 is a view in the direction of arrow 3 of Figure 2;
Figure 4 is an isometric view of a data connector;
Figure 5 is a view of the mating face of the connector of Figure 4;
Figure 6 is a view in the direction of arrow 6 of Figure 5;
Figure 7 is a view in the direction of arrow 7 of Figure 5;
Figure 8 is an isometric view of an audio plug;
Figure 8a is a view of the mating face of the audio plug;
Figure 9 is an isometric view of a power plug;
Figure 10 is a view of the mating face of the power plug of Figure 9;
Figure 11 is an isometric view of a cradle connector;
Figure 12 is a view of the mating face of the connector of Figure 11;
Figure 13 is a view in the direction of arrow 13 of Figure 12;
Figure 14 is a view in the direction of arrow 14 of Figure 12;
Figure 15 is a cross-sectional isometric view of an audio plug mated to the in-phone connector;
Figure 16 is a cross-sectional 3D isometric view of a data plug connected to the in-phone connector;
Figure 17 is a view of the mating face of a first embodiment of an in-phone connector according to the invention;
Figure 18 is a view in the direction of arrow 18 of Figure 17;
Figure 19 is a view in the direction of arrow 19 of Figure 17;
Figure 20 is a cross-sectional view through lines 20-20 of Figure 17;
Figure 21 is a portion of a PCB for connection to the connector of Figures 17-20;
Figure 22 is a top view of a first embodiment of a cradle connector according to the invention for mating with the in-phone connector of Figures 17-20;
Figure 23 is a view in the direction of arrow 23 of Figure 22;
Figure 24 is a view in the direction of arrow 24 of Figure 22;
Figure 25a is a view in the direction of arrow 25a of Figure 22;
Figures 25b and 25c are cross-sectional views through lines 25b and 25c respectively of Figure 22;
Figure 25d is an isometric view of the contacts and shorting bar of the connector of Figure 22;
Figure 26 is a portion of a PCB for connection to the cradle connector of Figures 22-25;
Figure 27 is an isometric view of a separate power plug for connection to the in-phone connector of Figures 18-20;
Figure 28 is a view of the mating face of the plug of Figure 27;
Figure 29 is a cross-sectional view through lines 29-29 of Figure 28;
Figures 30a and 30b are side views of the cradle connector of Figure 22 mounted on a PCB in two different orientations; and
Figures 31a and 31b are cross-sectional views of another embodiment of a cradle connector for angled mounting on a PCB.

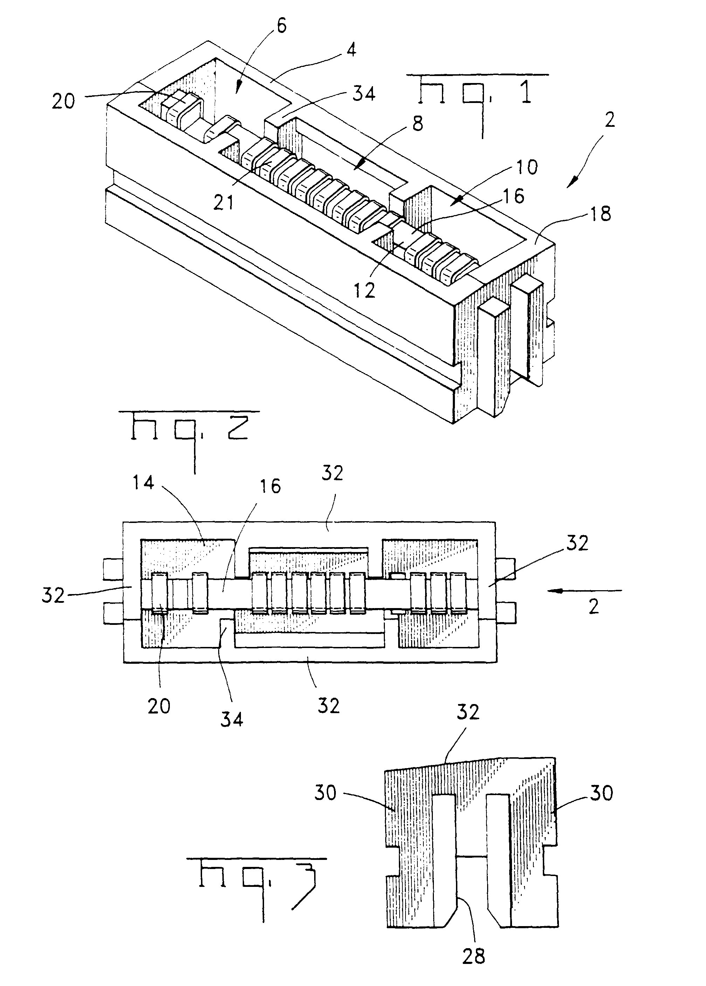

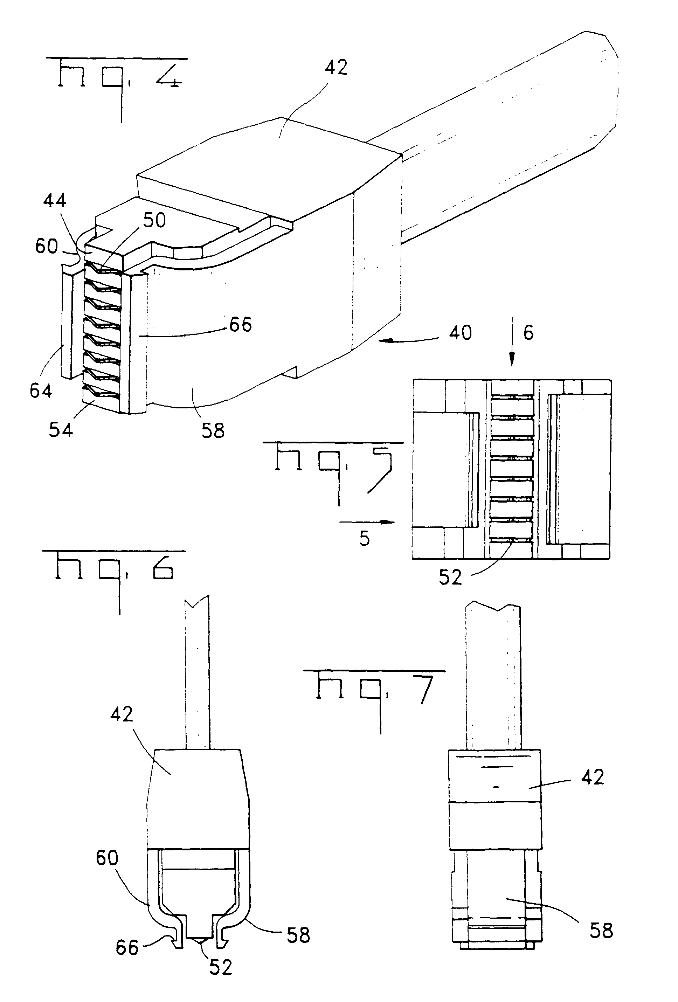

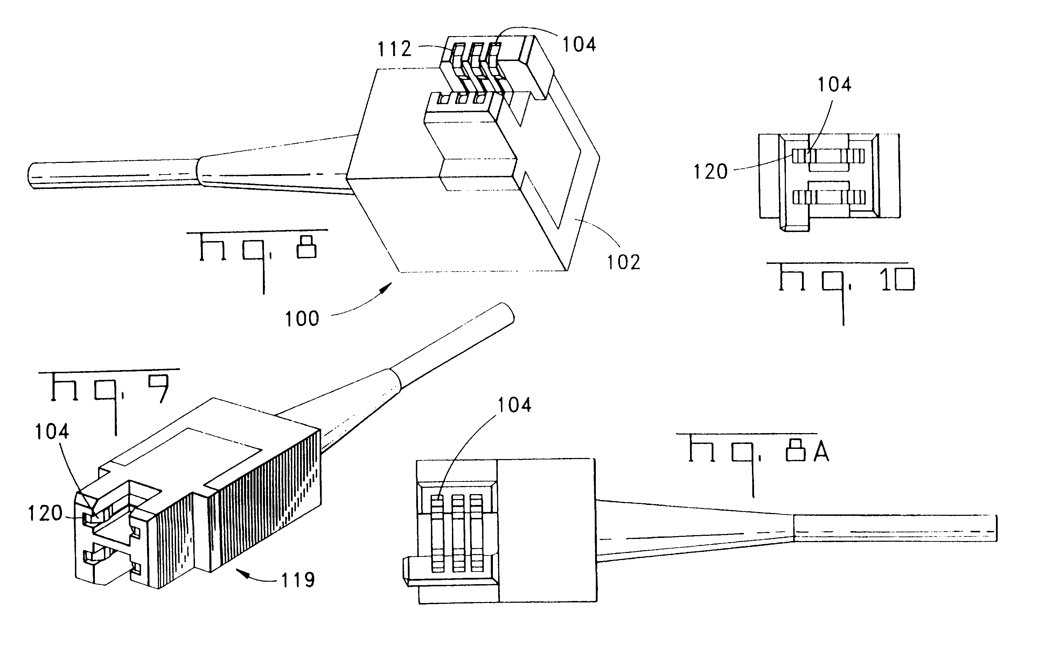

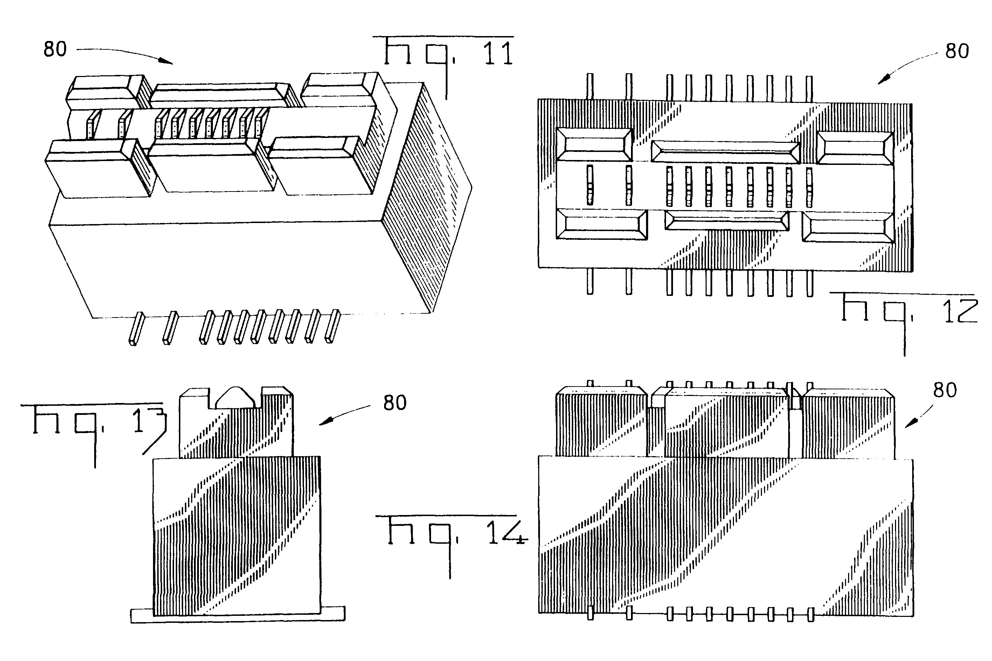

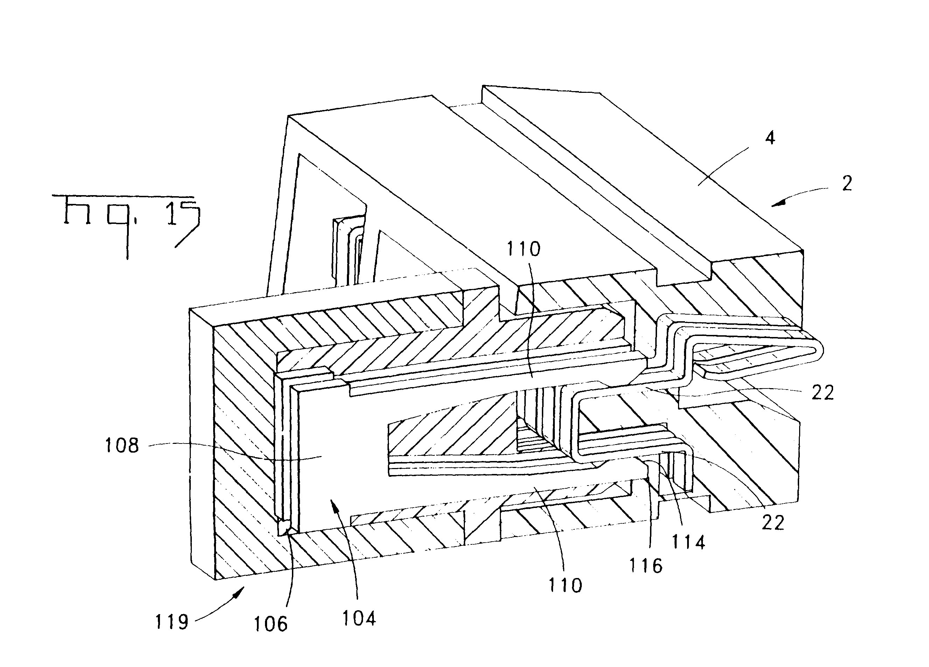

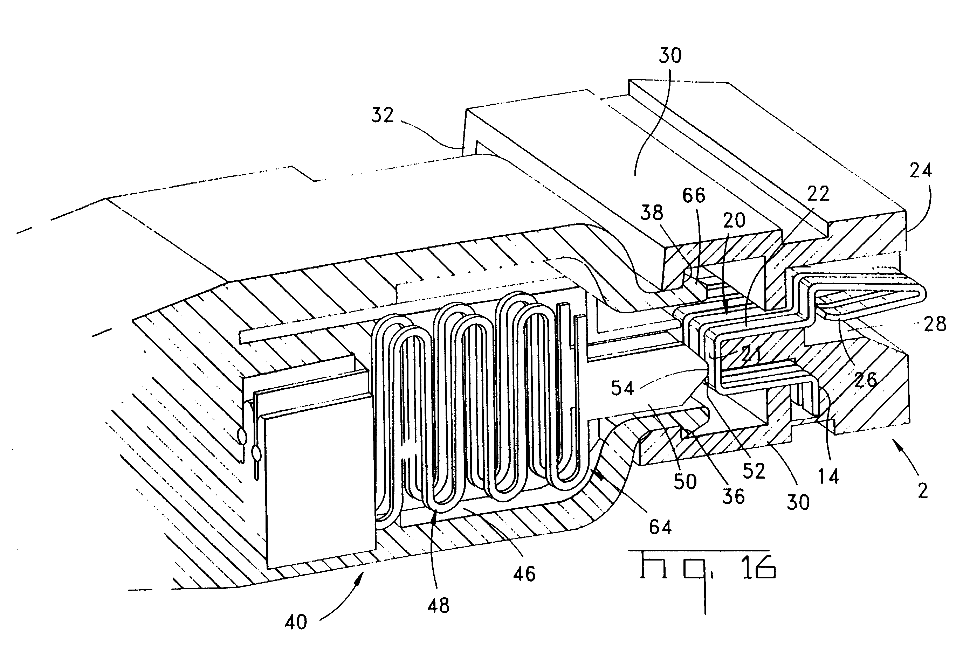

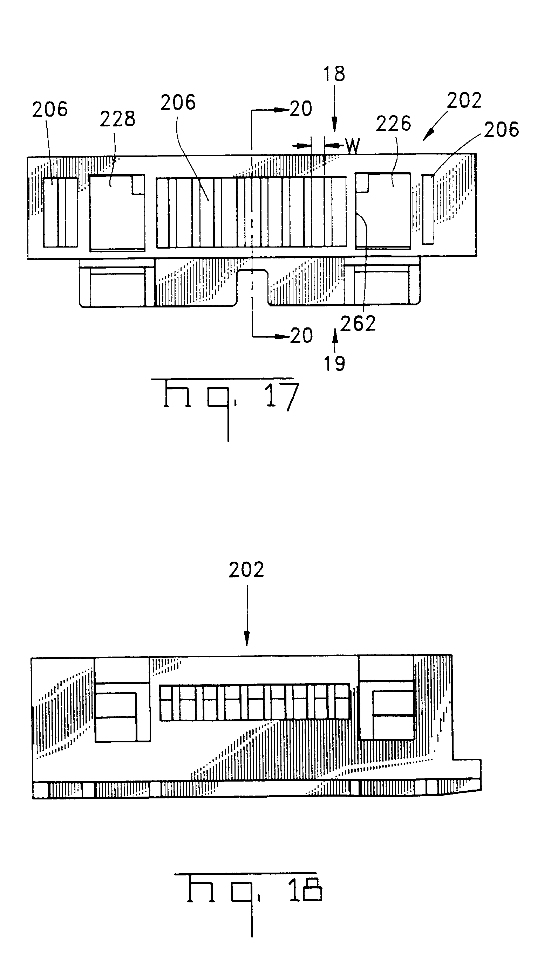

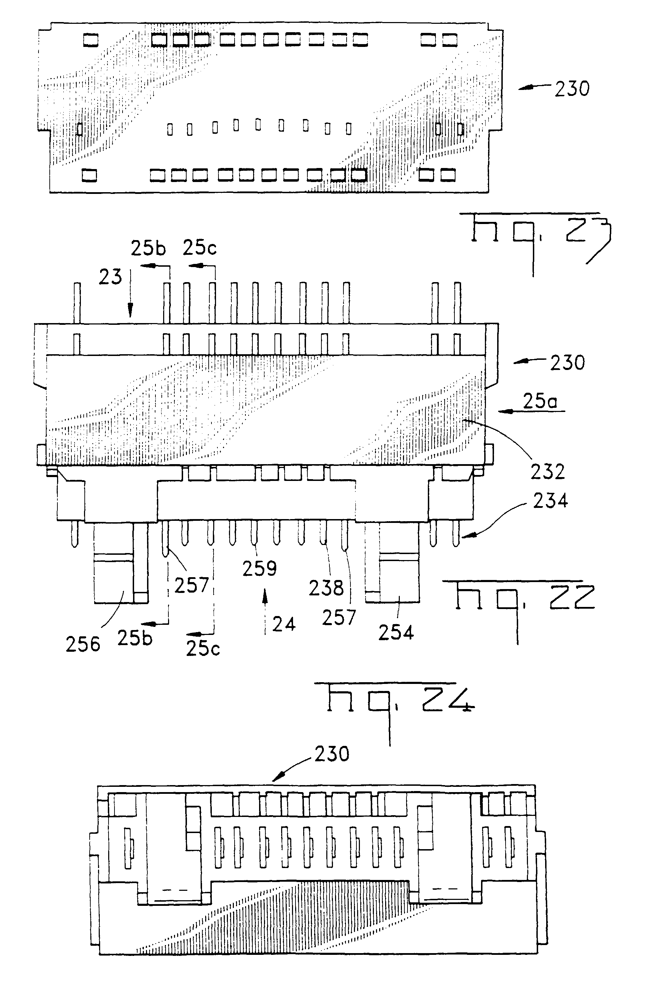

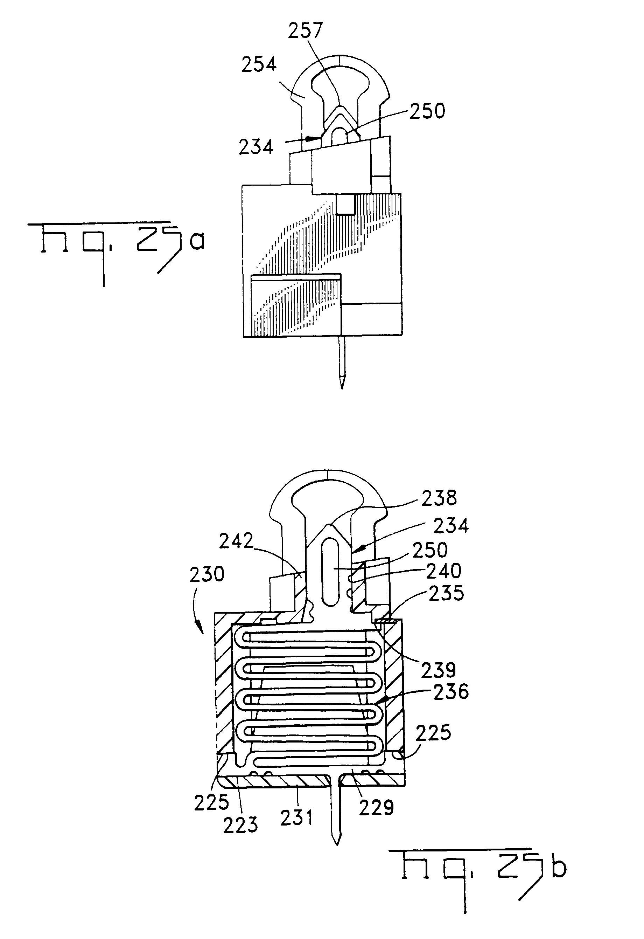

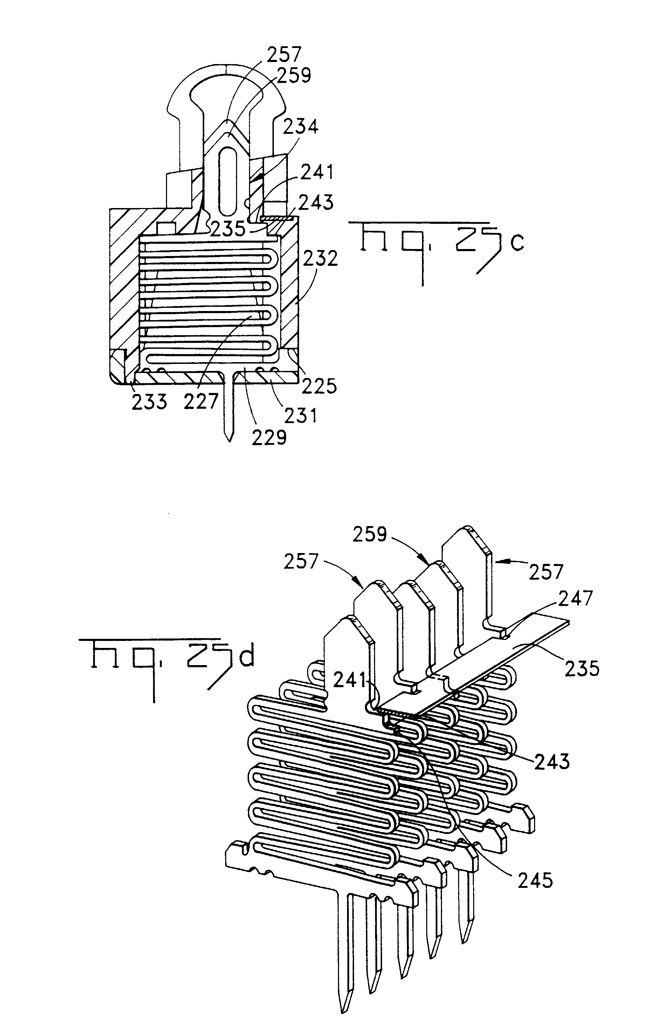

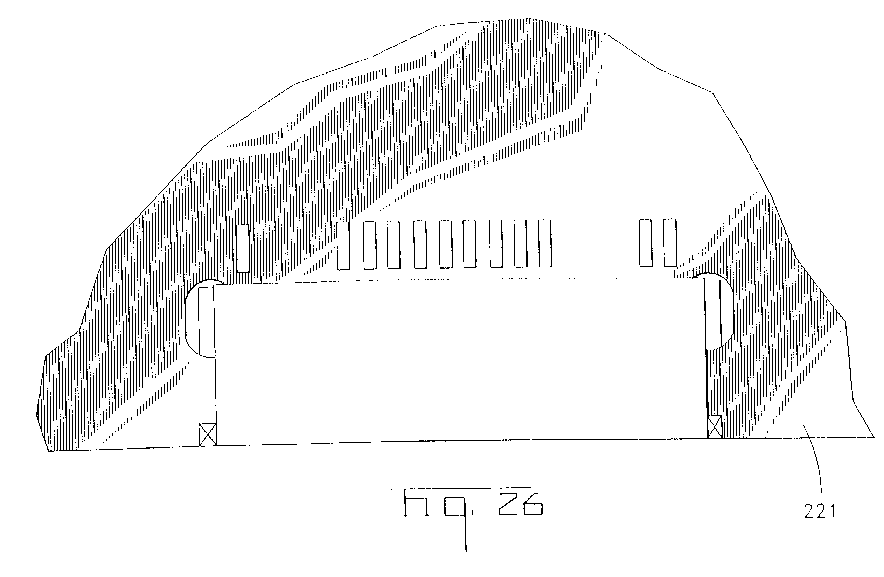

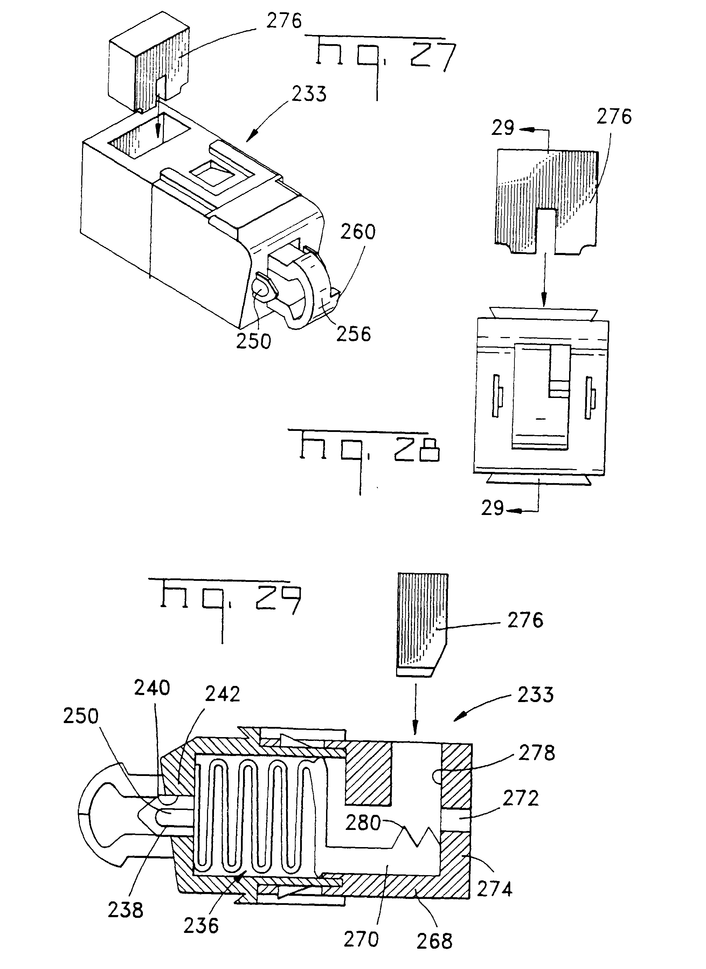

An example of a telephone connection system is shown in figures 1-16. The latching means of the invention including a plurality of latching positions in the in-phone connector is not incorporated in this system.

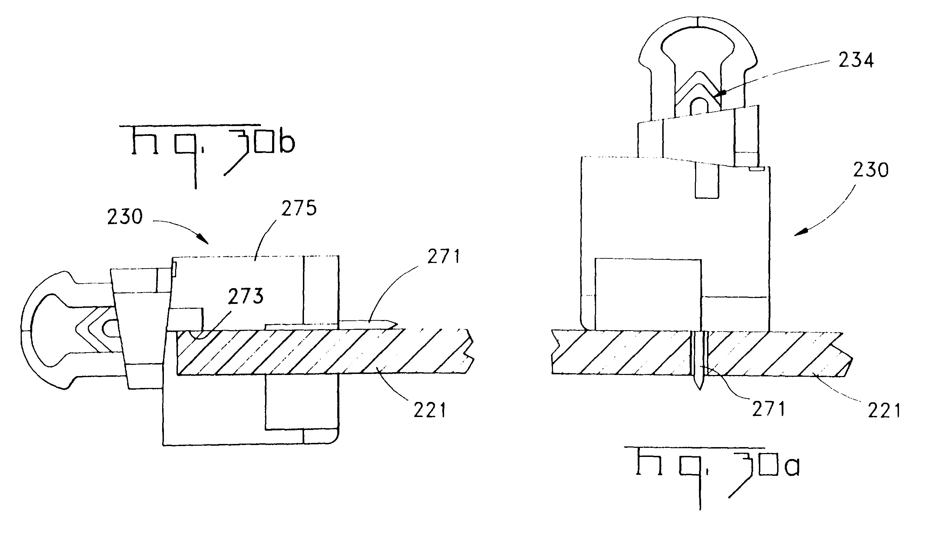

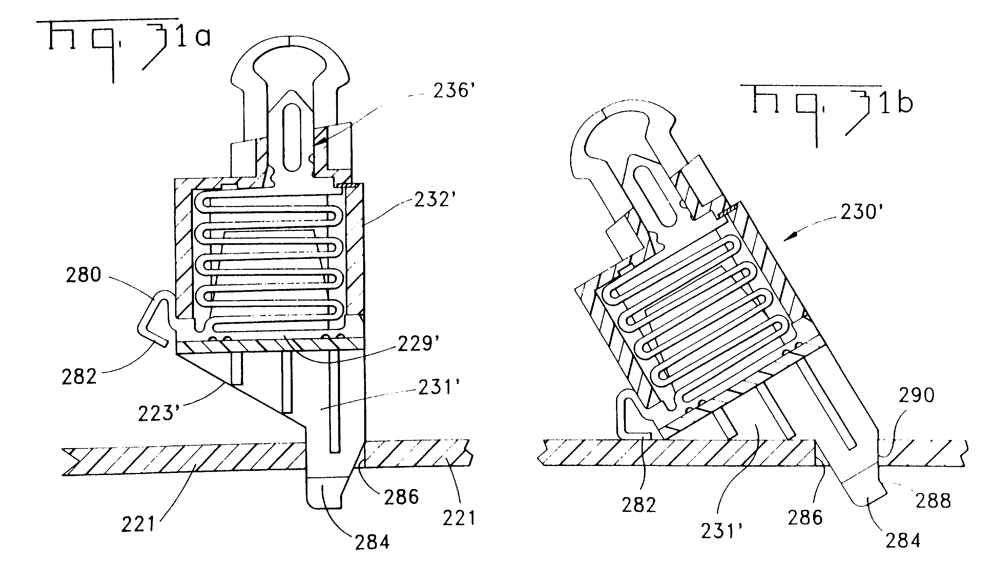

Referring first to Figures 1-3, a portable telephone connection system comprises an in-phone connector 2 for assembly to a portable telephone, and in particular for connection to a PCB of the portable telephone. The in-phone connector 2 comprises an insulative housing 4 having a plurality of chambers 6,8,10 for receiving respectively power, data and audio connectors therein for connection thereto. Extending centrally across the chambers 6,8,10, is a contact central support bar 12 extending from a base wall 14 of the housing 4 to a top wall 16 that is below a mating end 18 of the housing 4. Stamped and formed contacts in the form of strips are positioned transversely across the central support bar 12 and are bent therearound into a substantially U-shape having a top wall 21 and side contact walls 22 (see Figure 16). The contacts 20 have an extension extending from one side wall 22 through the bottom wall 14 extending towards a PCB receiving end 24 of the housing 4 and reversely folded back up towards the contact area 21,22 to provide a contact section 26. The contact section 26 is spaced from a slot 28 that extends from the PCB receiving end 24. A PCB of the portable telephone can thus be inserted into the slot 28 such that the contact sections 26 resiliently bias against circuit traces thereon for interconnecting the contacts to the PCB. The contacts 20 are in the shape of strips of metal of substantially constant width such that they can be placed in close juxtaposed relation one to the other for a very compact arrangement.

The chambers 6,8,10 of the housing 4 are formed by side walls 30 of the housing that run parallel to the central support bar 12, joined at their ends by end walls 32, whereby adjacent chambers are partially separated by walls 34 extending from the side walls 30 within the housing chambers.

The data plug chamber 8 comprises latching shoulders 36,38 extending proximate the mating face 32 along the inner side of the side walls 30, whereby one of the latching shoulders 36 is greater in length than the other latching shoulder 38 for polarization of the data plug. The latter ensures correct connection of the data plug to the data contacts of the in-phone connector.

Referring to Figures 4-7 and Figure 16, a data plug 40 is shown comprising an insulative housing 42 and a plurality of data terminals 44 mounted in cavities 46 in the insulative housing 42. The terminals 44 are comprised of substantially planar edge-stamped sheet metal having a very supple spring section 48 formed of a plurality of interconnecting U-bends, and a contact section 50 that projects through slots 52 through a mating face wall 54 of the housing 42. The contact sections 50 have arcuate contact tips 52 that project beyond the mating face 54, the spring section of the contacts being sufficiently supple to allow biasing of the contact tips below the mating surface 54. The spring section of these contacts thus allows a great absorption of tolerances while maintaining substantially constant contact pressure against mating contacts.

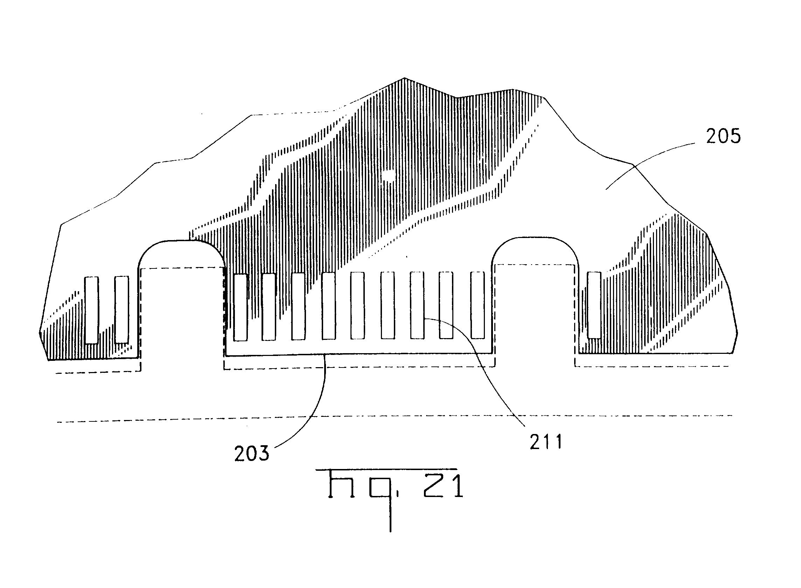

Flanking either side of the row of juxtaposed contacts 44 are resilient latch members 58,60 integrally extending from the housing 42 and having free ends 64 that extend up to and even slightly beyond the tips 52 of the contacts 44 for protection thereof. The latching arms 58 comprise hook members 66 at their free ends that are engageable with the latching shoulders 38 of the in-phone connector housing for secure retention of the data connector to the in-phone connector. The data connector can be simply removed from the in-phone connector by holding the data connector on either side and depressing the resilient latching members 58,60. The opposed latching members 66,64 have different lengths that are similar to the lengths of the latching shoulders 36,38 respectively to ensure correct polarization of the data connector with respect to the in-phone connector. When the data plug is latched to the in-phone connector 2, the contact tips 52 bias against the top surface 21 of the in-phone contacts 20. Due to the suppleness of the data connector terminals, their protection, and the provision of the top contact surface 21 of the in-phone connector, the in-phone connector can be simply plugged to a cradle connector 80 as shown in Figure 11 which has data contacts very similar to those data contacts 44 in the data connector. The latter provides a reliable, easy to effectuate connection.

Referring now to Figure 15 and Figures 8-10, an audio connector 100 is shown comprising an insulative housing 102 and a plurality of planar fork-type terminals 104 positioned in cavities 106 of the housing 102, and disposed in a juxtaposed manner. The fork-type terminals 104 comprise a base section 108 and a pair of spaced-apart contact arms 110 in cantilever shape extending therefrom towards a mating face 112 of the housing 102. The resilient contact arms 110 have contact protrusions 114 proximate their free ends 116 that are for engaging the in-phone contact side walls 22. Due to the resilient bending of the contact arms 110 in the plane of the sheet metal from which they are stamped, they can provide a relatively high resilient strength for high contact pressure against the mating contact side walls 22.

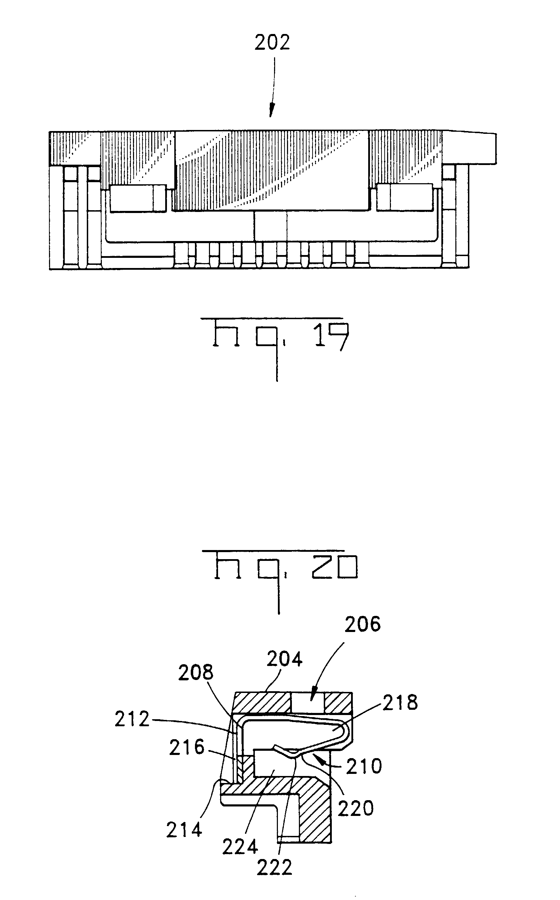

Referring to Figures 9 and 10 the power connector is constructed in a very similar manner to the audio connector of Figures 8 and 8a, however there are only 2 fork-typed contacts 104 separated by an insulative wall 120 due to the higher voltage application of the power contact, and therefore to avoid electrical creep or sparks between the power contacts.

With reference to Figures 17-29, a first embodiment of a portable telephone connection system according to the invention will now be described. Referring first to Figures 17-21, an in-phone connector 202 is for assembly on an edge 203 of a PCB 205 of a portable telephone for interconnection to power and data functions of the telephone. The in-phone connector 202 comprises an insulative housing 204 and a plurality of stamped and formed terminals 206 that comprise a contact section 208 for mating to a complementary connector, or connectors of the portable telephone connection system, and a PCB connection section 210 for resiliently biasing against circuit traces 211 along the edge 203 of the PCB.

The terminals 206 are stamped and formed into strips of metal of a substantially constant width W and are placed in a juxtaposed manner. The contact sections 208 are essentially planar top surfaces that form contact pads 212 against which complementary contacts are simply biased. The pads 212 are positioned within a recess 214 of the housing to provide some protection thereto with respect to foreign objects. The contacts 212 are separated one from the other by wall portions 216 for additional protection and electrical resistance between adjacent contacts and exterior objects. Individual slots 218 within the connector housing 204 are provided for receiving the terminals 206 therein, where an interference fit is provided between the width of the contacts and the slots 218 for retention of the contacts therein. A reversely bent cantilever beam contact arm 220 is provided for the PCB connection section 210, and having a contact protrusion 222 that is biased into a cavity 224 for receiving the edge 223 of the PCB therein. Due to the positioning of the connector 202 on the very edge of the PCB 205, and the positioning of the resilient contacts proximate the edge in a reversely bent manner, the connector is very short and minimum space is required for connection of the connector 202 to the PCB 205. This advantageously provides a very compact arrangement, using little space on the PCB.

The connector 202 is also provided with cavities 226,228 for receiving complementary latching members of complementary connectors therein. The latching members 226,228 are positioned not at the very ends of the connector, but between terminals 206 such that separate plugs such as audio, data or power plugs can be connected to the in-phone connector either to the one latching member 226, or to the other latching member 228, or to both as in the case of a cradle connector, thereby allowing various connector systems to be plugged to the in-phone connector 202. When the telephone is remote from its holder or cradle, one can simultaneously connect a power plug and a signal plug, for example, one next to the other, securely latched to the latching members 226 and 228 respectively.

Referring now to Figures 22-26, the portable telephone connection system also comprises a cradle connector 230 for mounting on a PCB 221 of a base station, cradle or holder within which the portable telephone is received. The holder or cradle may for example be built into the interior of an automobile and supply the telephone with power, data signals and other functions. The cradle connector 230 comprises an insulative housing 232 and a plurality of substantially planar terminals 234 stamped and formed from sheet metal and arranged in a juxtaposed manner for contact with the terminals 206 of the in-phone connector. The terminals 234 are similar in construction to the data terminals 44 of the first embodiment, in that they have a very supple meandering spring section 236 that is also the same as that shown in Figure 29 of the power plug connector terminal, and a contact section 238 that projects through a cavity 240 extending through a top wall 242 of the connector housing.

In the cradle connector 230, some of the contact tips 257 of certain contacts such as the grounding contacts, extend beyond the tips 259 of signal contacts to ensure that there is a make-first, break-last connection to ground to diminish or prevent electrostatic discharge.

The cradle connector 230 further comprises a shorting bar 235 mounted at a corner against the top wall 242 of the housing. Each contact 238 comprises extensions 239 extending transversely below the contact section 238. The extension 239 has a first shoulder 241, and a second shoulder 243 stepped therefrom and extending to a free end 245 (see Figure 25d). The shorting bar 235 is a strip of sheet metal that is provided with cutouts (indents) 247 positioned in alignment with the grounding contacts 257. The first shoulder 241 of the lower contact 259 abuts against the grounding strip 235, whereby due to the provision of the indents 247, the grounding contacts 257 abut the shorting bar 235 with the second shoulder 243 in order to have the contacts extending further upwards for the make-first, break-last contact. All the contacts 257,259 can thus be made in an identical manner whereby the very simple shorting bar 235 only needs to be indented at regular intervals making the manufacturing procedure and assembly very cost-effective. The shorting bar 235 can extend the whole length of the housing and beyond in a continuous strip, and can also be used to link a plurality of cradle connectors 230 together for handling or transport, whereby the shorting bar can then be sheared to separate the connectors attached thereto.

The contact 234 can be assembled into the cradle connector housing 232 by provision of a separate insulative base 231 to which a base section 229 of the contacts 234 are mounted against. The insulative base 231 can be provided with upstanding walls 227 to separate, guide and support the spring sections 236 of the contacts. The insulative base 231 and contacts 234 can then be inserted from a mounting face of the housing 232 and securely fixed thereto by latch means or otherwise. Cavities 225 extending through side walls of the housing 232 proximate the mounting face 223 receive extensions of the contact base section 229 for anchoring of the contact base securely in the housing. Cost-effective and easy assembly of the housing is thus ensured.

In Figures 27-29, a power plug 233 is shown with a similar spring end contact section of the terminal to the terminals 234 of the cradle connector 230. The contact section 238 can be fully biased within the cavity 240, and due to the very supple spring because of its multiple meandering shape, there is no risk of overstressing or damaging the contact. Lateral bending strength of the contact section 238 is increased by embossing the contact section with a protrusion 250. This feature significantly increases the robustness of the connector in addition with the ability of the contact sections to be fully received within the cavities 240, thereby providing protection from foreign objects that may abut the terminals. Furthermore, due to the substantially planar shape of the terminals 234, and the use of identical terminals in the connectors 230 and other connectors such as a plug connector 233, a compact and cost-effective design is achieved.

The cradle connector 230 is provided with latches 254,256 that are received in the latching cavities 226,228 respectively of the in-phone connector 202. The plug connector 233 is also provided with a similar latch 258 which is received within one of the latching cavities 266 of the in-phone connector 202. The latches 254,256,258 extend well beyond the tips 257 of the outwardmost terminals and therefore provide a means of protecting the terminals and ensuring that connectors during coupling are correctly positioned or guided prior to interconnection of the mating terminals. The latches 254,256,258 are also provided with a polarizing protrusion 260 (see Figure 27) complementary to a polarizing recess 262 of the in-phone connector cavity 226 to ensure correct orientation of the plug connectors 233, and other connectors of the portable telephone system to the in-phone connector.

Referring to Figures 27-29, the power plug 233 comprises an insulation piercing connection section 270 extending from the spring section 236 for piercing a power cable that is received through a cavity 272 that extends through an end wall 274 of the housing 268. A stuffer cap 276 is received and guided in a transverse cavity 278 for stuffing the cable onto piercing contacts 280 for connection thereof to inner conducting strands of the cables.

Referring to Figures 30a and 30b, the cradle connector 230 can either be mounted in the vertical manner as shown in Figure 30a whereby contact sections 271 of the contacts 234 are mounted in through holes of the PCB 221, or the connector can be mounted as shown in Figure 30b perpendicular thereto. The connector orientation of Figure 30b is such that the contact portions 271 lay on circuit pads of the PCB 221 and can subsequently be soldered thereto, whereby a shoulder 273 is provided from an end wall 275 of the cradle connector in order to correctly position and align the housing with respect to the plane of the PCB.

Referring to Figures 31a and 31b, an alternative embodiment of a cradle connector 230' is shown. The cradle connector 230' is very similar to the cradle connector 230 described hereabove, except for a few differences that will now be described relating to the insulative base 231'. The base 231' comprises an oblique surface 223' for abutment against the PCB 221 for extension of the connector at an acute angle with respect to the plane of the board as shown in Figure 31b. The base 229' of the contacts 234' can be provided with an extension 280 having a portion 282 aligned with and parallel to the mounting surface 223' for abutment and connection to circuit traces on the PCB 221. The base 231' comprises a hooked portion 284 that can be inserted into a cavity 286 of the PCB in the vertical position, whereby the connector 230 can then be rotated until abutment of the mounting surface 223' against the PCB whereby the hooked portion 284 locks the base 231 to the PCB by engagement of an extension 288 against a corner 290 of the PCB hole 286. Simple to assemble but nevertheless robust mounting of the connector to the PCB is thus enabled. Minor variations to the contact design 234' with respect to the contact 234 of the first embodiment, and use of a similar housing 232' to that of the previous embodiment, but simply providing a different base section 231' enables a cost-effective provision of connectors 230,230' for mounting at a variety of different angles: whether vertical as shown in Figure 30a; horizontal as shown in Figure 30b; or oblique as shown in Figure 31b.

Advantageously therefore, a very compact connection system for portable telephones is provided that can cater for both high and low power connections in a very compact arrangement, with easy, rapid connection (for example where the telephone can be simply placed on a base station connector). The latter is furthermore accomplished in a very cost-effective manner.

## Claims

1. Portable telephone connection system comprising an in-phone connector (202) for assembly to a portable telephone, the in-phone connector having an insulative housing (204) and a plurality of juxtaposed strip contacts (206) positioned therein, the contacts having a top contact surface (212) for receiving edge contacts (238) thereagainst, and a connection section (210) for contacting a printed circuit board (PCB), wherein the juxtaposed strip contacts of the in-phone connector include power, data and signal contacts, the connection system further comprising complementary connectors (230,233,230') for mating with the in-phone connector for electrical connection to the strip contacts, one of the complementary connectors being a cradle connector (230,230') having resiliently biasable contacts mounted in a housing, the contacts having a very supple meandering spring section (236) to enable large travel for compensating tolerances in the position of the connectors and also to protect the contacts from damage, and wherein the connection system is provided with latching means (254,256,226,228) enabling plugging of either said cradle connector or of other complementary connectors, including a charger plug or signal connector, the latching means comprising a plurality of latching positions (226,228) in the in-phone connector for latching of different said complementary connectors at different positions on the in-phone connector.

2. Portable telephone connection system of claim 1, characterized in that the cradle contacts (238) are stamped from sheet metal in a substantially planar profile.

3. Portable telephone connection system of claim 1 or 2, further characterized in that the cradle connector is provided with latches (256,254) for retention thereof to the in-phone connector, where the latches extend beyond tips (257) of the cradle contacts to ensure protection thereof.

4. Portable telephone connection system of any one of the claims 1-3, further characterized in that the cradle contacts are biasable fully within the cradle connector housing (232) without damage to the spring portion (236) due to its suppleness, to ensure that even if a foreign object abuts the contacts, they cannot be damaged by overstressing.

5. Portable telephone connection system of any one of the preceding claims, further characterized in that the connection section of the strip contacts (206) comprises a resilient contact arm for biasing a contact protrusion (222) provided proximate a free end thereof against a PCB of the telephone.

6. Portable telephone connection system according to any one of the preceding claims wherein a contact section of the cradle contacts for mating with the complementary strip contacts of the in-phone connector is embossed (250) along its length to increase its stiffness with respect to lateral bending forces.

7. Portable telephone connection system of anyone of the preceding claims wherein the cradle connector (230,230') comprises a shorting bar (235) interconnecting a plurality of cradle contacts (234) for protection against electrostatic discharge.

8. Portable telephone connection system of claim 7 wherein the cradle contacts (234) comprise extensions (239) proximate contact sections (238) of the cradle contacts (234), where the contact sections are for abutment against the in-phone contact strips (206), the extensions (239) for abutment against the shorting bar (235).

9. Portable telephone connection system of claim 7 or 8 wherein the shorting bar is a stamped strip of metal.

10. Portable telephone connection system of claim 7, 8 or 9 wherein the cradle connector comprises a make-first, breaklast grounding contact (257) extending further than the adjacent power, or signal contacts (259).

11. Portable telephone connection system according to claim 10 wherein the grounding contact (257) is identical to the adjacent signal contacts (259).

12. Portable telephone connection system according to claim 11 wherein the shorting bar (235) has indents (247) at the position of the grounding contacts (257), and wherein the contacts (234) are provided with two shoulders (241,243) offset with respect to each other in the direction of biasing of the contacts, the shoulders for abutting the shorting bar whereby the signal contacts (259) abut the bar with a first shoulder (241) and the grounding contact abuts the shorting bar with the second shoulder (243) due to the provision of the indent, such that the grounding contact extends beyond the signal contacts.

## Patentansprüche

1. Verbindungssystem für tragbares Telefon, das aufweist: einen Telefonverbinder (202) für eine Montage an ein tragbares Telefon, wobei der Telefonverbinder ein isolierendes Gehäuse (204) und eine Vielzahl von darin angeordneten nebeneinanderliegenden Streifenkontakten (206) aufweist, wobei die Kontakte eine obere Kontaktfläche (212) für das Aufnehmen von Randkontakten (238) daran aufweisen; und einen Verbindungsabschnitt (210) für das Kontaktieren einer Leiterplatte (PCB), worin die nebeneinanderliegenden Streifenkontakte des Telefonverbinders Strom-, Daten- und Signalkontakte umfassen, wobei das Verbindungssystem außerdem komplementäre Verbinder (230, 233, 230') für einen Eingriff mit dem Telefonverbinder für eine elektrische Verbindung mit den Streifenkontakten aufweist, wobei einer der komplementären Verbinder ein Gabelverbinder (230, 230') ist, der elastisch vorspannbare Kontakte aufweist, die in einem Gehäuse montiert sind, wobei die Kontakte einen sehr biegsamen Mäanderfederabschnitt (236) aufweisen, um eine große Bewegung für das Ausgleichen von Toleranzen in der Position der Verbinder zu ermöglichen, und um ebenfalls die Kontakte vor einer Beschädigung zu schützen, und worin das Verbindungssystem mit einer Einklinkeinrichtung (254, 256, 226, 228) versehen ist, die das Stecken von entweder dem Gabelverbinder oder der anderen komplementären Verbinder ermöglicht, die einen Ladegerätstecker oder Signalverbinder umfassen, wobei die Einklinkeinrichtung eine Vielzahl von Einklinkpositionen (226, 228) im Telefonverbinder für das Einklinken der verschiedenen komplementären Verbinder in unterschiedlichen Positionen am Telefonverbinder aufweist.

2. Verbindungssystem für tragbares Telefon nach Anspruch 1, dadurch gekennzeichnet, daß die Gabelkontakte (238) aus Blech in einem im wesentlichen ebenen Profil gestanzt sind.

3. Verbindungssystem für tragbares Telefon nach Anspruch 1 oder 2, außerdem dadurch gekennzeichnet, daß der Gabelverbinder mit Klinken (256, 254) für dessen Arretierung im Telefonverbinder versehen ist, wobei sich die Klinken über die Spitzen (257) der Gabelkontakte hinaus erstrecken, um deren Schutz zu sichern.

4. Verbindungssystem für tragbares Telefon nach einem der Ansprüche 1 bis 3, außerdem dadurch gekennzeichnet, daß die Gabelkontakte innerhalb des Gabelverbindergehäuses (232) ohne Beschädigung des Federabschnittes (236) infolge ihrer Biegsamkeit vollständig vorspannbar sind, um zu sichern, daß sie, selbst wenn ein Fremdkörper an die Kontakte stößt, nicht durch eine Überbeanspruchung beschädigt werden können.

5. Verbindungssystem für tragbares Telefon nach einem der vorhergehenden Ansprüche, außerdem dadurch gekennzeichnet, daß der Verbindungsabschnitt der Streifenkontakte (206) einen elastischen Kontaktarm für das Vorspannen eines Kontaktvorsprunges (222), der in unmittelbarer Nähe eines freien Endes davon vorhanden ist, gegen eine Leiterplatte des Telefons aufweist.

6. Verbindungssystem für tragbares Telefon nach einem der vorhergehenden Ansprüche, bei dem ein Kontaktabschnitt der Gabelkontakte für einen Eingriff mit den komplementären Streifenkontakten des Telefonverbinders in seiner Längsrichtung erhaben ist (250), um seine Steifigkeit mit Bezugnahme auf seitliche Biegekräfte zu erhöhen.

7. Verbindungssystem für tragbares Telefon nach einem der vorhergehenden Ansprüche, bei dem der Gabelverbinder (230, 230') einen Kurzschlußbügel (235) aufweist, der eine Vielzahl von Gabelkontakten (234) für einen Schutz gegen eine elektrostatische Entladung miteinander verbindet.

8. Verbindungssystem für tragbares Telefon nach Anspruch 7, bei dem die Gabelkontakte (234) Verlängerungen (239) in unmittelbarer Nähe der Kontaktabschnitte (238) der Gabelkontakte (234) aufweisen, wo die Kontaktabschnitte für ein Anstoßen an die Telefonkontaktstreifen (206) vorhanden sind, die Verlängerungen (239) für ein Anstoßen an den Kurzschlußbügel (235).

9. Verbindungssystem für tragbares Telefon nach Anspruch 7 oder 8, bei dem der Kurzschlußbügel ein gestanzter Metallstreifen ist.

10. Verbindungssystem für tragbares Telefon nach Anspruch 7, 8 oder 9, bei dem der Gabelverbinder einen unterbrechungslosen Erdungskontakt (257) aufweist, der sich weiter als die benachbarten Strom- oder Signalkontakte (259) erstreckt.

11. Verbindungssystem für tragbares Telefon nach Anspruch 10, bei dem der Erdungskontakt (257) mit den benachbarten Signalkontakten (259) identisch ist.

12. Verbindungssystem für tragbares Telefon nach Anspruch 11, bei dem der Kurzschlußbügel (235) Einschnitte (247) in der Position der Erdungskontakte (257) aufweist, und bei dem die Kontakte (234) mit zwei Vorsprüngen (241, 243) versehen sind, die mit Bezugnahme zueinander in der Richtung des Vorspannens der Kontakte versetzt sind, wobei die Vorsprünge für ein Anstoßen an den Kurzschlußbügel vorhanden sind, wodurch die Signalkontakte (259) gegen den Bügel mit einem ersten Vorsprung (241) und die Erdungskontakte gegen den Kurzschlußbügel mit dem zweiten Vorsprung (243) infolge der Bereitstellung des Einschnittes stoßen, so daß sich der Erdungskontakt über die Signalkontakte hinaus erstreckt.

## Revendications

1. Système de connexion d'un téléphone portatif comprenant un connecteur intégré au téléphone (202) destiné à être assemblé à un téléphone portatif, le connecteur intégré au téléphone comportant un boîtier isolant (204) et plusieurs contacts de bande juxtaposés (206) qui y sont positionnés, les contacts comportant une surface de contact supérieure (212) pour recevoir contre elle des contacts latéraux (238), et une section de connexion (210) destinée à contacter une plaquette à circuits imprimés (PCB), les contacts de bande juxtaposés du connecteur intégré au téléphone englobant des contacts d'alimentation, de données et de signal, le système de connexion comprenant en outre des connecteurs complémentaires (230, 233, 230') destinés à être accouplés au connecteur intégré au téléphone en vue d'une connexion électrique avec les contacts de bande, un des connecteurs complémentaires étant un connecteur de support (230, 230') comportant des contacts à poussée élastique montés dans un boîtier, les contacts comportant une section élastique sinueuse très souple (236) pour permettre un long déplacement en vue de la compensation des tolérances concernant la position des connecteurs et pour protéger les contacts contre un endommagement, le système de connexion comportant des moyens de verrouillage (254, 256, 226, 228), permettant le branchement dudit connecteur de support ou d'autres connecteurs complémentaires, englobant une fiche de chargement ou un connecteur de signal, les moyens de verrouillage comprenant plusieurs positions de verrouillage (226, 228) dans le connecteur intégré au téléphone pour assurer le verrouillage desdits différents connecteurs complémentaires au niveau de différentes positions sur le connecteur intégré au téléphone.

2. Système de connexion d'un téléphone portatif selon la revendication 1, caractérisé en ce que les contacts de support (238) sont estampés à partir d'une tôle dans un profil pratiquement plan.

3. Système de connexion d'un téléphone portatif selon les revendications 1 ou 2, caractérisé en outre en ce que le connecteur de support comporte des verrous (256, 254) en vue de sa retenue dans le connecteur intégré au téléphone, les verrous s'étendant au-delà des pointes (257) des contacts de support pour assurer sa protection.

4. Système de connexion d'un téléphone portatif selon l'une quelconque des revendications 1 à 3, caractérisé en outre en ce que les contacts de support peuvent être poussés complètement dans le boîtier du connecteur de support (232), sans endommagement de la partie élastique (236) par suite de sa souplesse, pour empêcher que même si des objets étrangers butent contre les contacts, ceux-ci ne peuvent pas être endommagés par une contrainte excessive.

5. Système de connexion d'un téléphone portatif selon l'une quelconque des revendications précédentes, caractérisé en outre en ce que la section de connexion des contacts de bande (206) comprend un bras de contact élastique pour pousser une saillie de contact (222) agencée près d'une extrémité libre correspondante contre une PCB du téléphone.

6. Système de connexion d'un téléphone portatif selon l'une quelconque des revendications précédentes, dans lequel une section de contact des contacts de support, destinée à être accouplée avec les contacts de bande complémentaires du connecteur intégré au téléphone est nervurée le long de sa longueur pour accroître sa rigidité par rapport à des forces de pliage latérales.

7. Système de connexion d'un téléphone portatif selon l'une quelconque des revendications précédentes, dans lequel le connecteur de support (230, 230') comprend une barre de court-circuit (235) interconnectant plusieurs contacts de support (234) pour assurer la protection contre une décharge électrostatique.

8. Système de connexion d'un téléphone portatif selon la revendication 7, dans lequel les contacts de support (234) comprennent des extensions (239) près des sections de contact (238) des contacts de support (234), les sections de contact étant destinées à buter contre les bandes de contact intégrées au téléphone (206), les extensions (239) étant destinées à buter contre la barre de court-circuit (235).

9. Système de connexion d'un téléphone portatif selon les revendications 7 ou 8, dans lequel la barre de court-circuit est une bande estampée à partir de métal.

10. Système de connexion d'un téléphone portatif selon les revendications 7, 8 ou 9, dans lequel le connecteur de support comprend un contact de mise à la terre à chevauchement (257) s'étendant plus loin que les contacts d'alimentation ou de signal adjacents (259).

11. Système de connexion d'un téléphone portatif selon la revendication 10, dans lequel le contact de mise à la terre (257) est identique aux contacts de signal adjacents (259).

12. Système de connexion d'un téléphone portatif selon la revendication 11, dans lequel la barre de court-circuit (235) comporte des encoches (247) au niveau de la position des contacts de mise à la terre (257), les contacts (234) comportant deux épaulements (241, 243) décalés l'un par rapport à l'autre dans la direction de poussée des contacts, les épaulements étant destinés à buter contre la barre de court-circuit, les contacts de signal (259) butant ainsi contre la barre avec un premier épaulement (241) et les contacts de mise à la terre butant contre la barre de court-circuit avec le deuxième épaulement (243) par suite de la présence de l'entaille, de sorte que le contact de mise à la terre s'étend au-delà des contacts de signal.
